# EUROPEAN PATENT SPECIFICATION

(11) **EP 1 475 575 B1**
(45) Date of publication and mention of the grant of the patent: **11.09.2013**
(21) Application number: 03703019.4
(22) Date of filing: 22.01.2003
(51) Int. Cl.: F04B 41/06, F24F 11/00, F25B 13/00, F25B 49/02

(54) **AIR CONDITIONER**
KLIMAANLAGE
CLIMATISEUR

(30) Priority: 25.01.2002 JP 2002017532
(43) Date of publication of application: 10.11.2004
(73) Proprietor: Toshiba Carrier Corporation, Tokyo 105-8001 (JP)
(72) Inventor: YAMAGUCHI, Kiyoshi, Fuji-shi, Shizuoka 417-0051 (JP); CHUMA, Yoshihiro, Fuji-shi, Shizuoka 416-0908 (JP); SUZUKI, Hideaki, Fuji-shi, Shizuoka 416-0945 (JP)
(74) Representative: Granleese, Rhian Jane
(86) International application number: PCT/JP2003/000538
(87) International publication number: WO 2003/064934

(56) References cited:
- EP-A2- 0 838 640
- JP-A- 5 149 604
- JP-A- 10 220 886
- JP-A- 11 193 966
- JP-U- 63 037 970
- US-A- 5 797 729

## Description

### Technical Field

The present invention relates to an air conditioner comprising a plurality of compressors.

### Background Art

An air conditioner of a kind comprises two compressors in an outdoor unit to control the number of revolutions of the compressors in accordance with air-conditioning load.

In the air conditioner, one of the compressors is operated with air-conditioning load corresponding to substantially less than half of the rated power of the outdoor unit, and the number of revolutions of the compressor is controlled in accordance with the air-conditioning load. With the air-conditioning load corresponding to half or more of the rated power of the outdoor unit, one of the compressors is operated at the maximum number of revolutions or a close number to the maximum number of revolutions while driving and the number of revolutions of the other compressor are increased or decreased in accordance with the air-conditioning load.

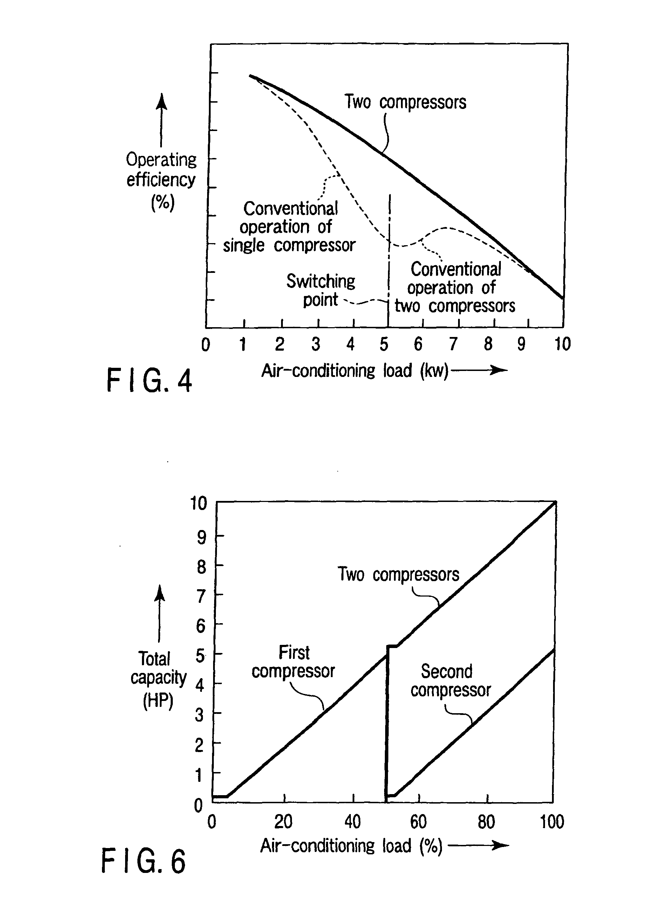

The above-described air conditioner has the following problems in an area of intermediate air-conditioning load where the operation of one compressor and the operation of two compressors are switched.
(1) The operating efficiency of each compressor becomes deteriorated, which lowers the operating efficiency of the overall air conditioner.
(2) As shown in FIG. 6, the total power of each compressor is changed step by step, which gives a bad influence to comfort.
(3) When two compressors are operated, operating and stopping the operation are repeated at a short time Interval, i.e. a short intermittence operation is performed on one of the compressors whose number of revolutions. The short intermittence operation lowers the operating efficiency similarly to problem (1), and gives a bad influence to comfort similarly to problem (2). Moreover, the short intermittence operation gives a bad influence to lifetime of the compressor and complicates the oil level management of a lubricating oil contained in each compressor.

US 5797729 A disloses a refrigeration system having a plurality of variable speed compressors, each variable speed compressor operating at a speed substantially the same as the other energized variable speed compressors.

EP 0838640A2 discloses air conditioning equipment with an oil level equalizing system, which includes a plurality of low-pressure shell type compressors.

JP 10220886 A discloses an engine-driven air conditioner, wherein the capacities of two compressors are different, whereby three sets of capacity zones can be obtained.

JP 11193966 A discloses a gas heat pump apparatus comprising a large volume compressor and a small volume compressor. Since the capacities of the two compressors are set to large and small capacities, and the compressors can be selectively operated by clutches, it can deal with a low load operation of the indoor side.

### Disclosure of the Invention

The object of the present invention is to provide an air conditioner excellent in reliability, capable of improving operating efficiency of each of condensers, varying total capacity of each of the condensers not step by step but smoothly, and preventing the compressors from being repeatedly operated and stopped in a short time interval.

According to an aspect of the present invention, there is provided an air conditioner comprising a refrigerating cycle which has a plurality of compressors, an outdoor heat exchanger and an Indoor heat exchanger, and which is configured to urge a refrigerant discharged from each of the compressors to pass through the outdoor heat exchanger and the indoor heat exchanger and to be sucked In each of the compressors; and
a controller configured to control the numbers of revolutions of the compressors in a common fluctuation pattern in accordance with air-conditioning load of a room in which the indoor heat exchanger is installed;
wherein the controller is configured to set the numbers of revolutions of the compressors at a common value in a lower revolution control area and to keep a difference between the numbers of revolutions of the compressors in a higher revolution control area.

### Brief Description of the Drawings

FIG. 1 is a block diagram showing a structure of an embodiment of the present invention;
FIG. 2 is a flowchart explaining an operation which is a first example useful for understanding the present invention;
FIG. 3 is a graph explaining variation in total power of each compressor in an embodiment;
FIG. 4 is a graph explaining variation in operating efficiency in an embodiment;
FIG. 5 Is a flowchart explaining an operation of an embodiment; and
FIG. 6 is a graph explaining variation in total power of each compressor in a conventional air conditioner.

### Best Mode for Carrying Out the Invention

An embodiment of the present invention will be described below with reference to the accompanying drawings.

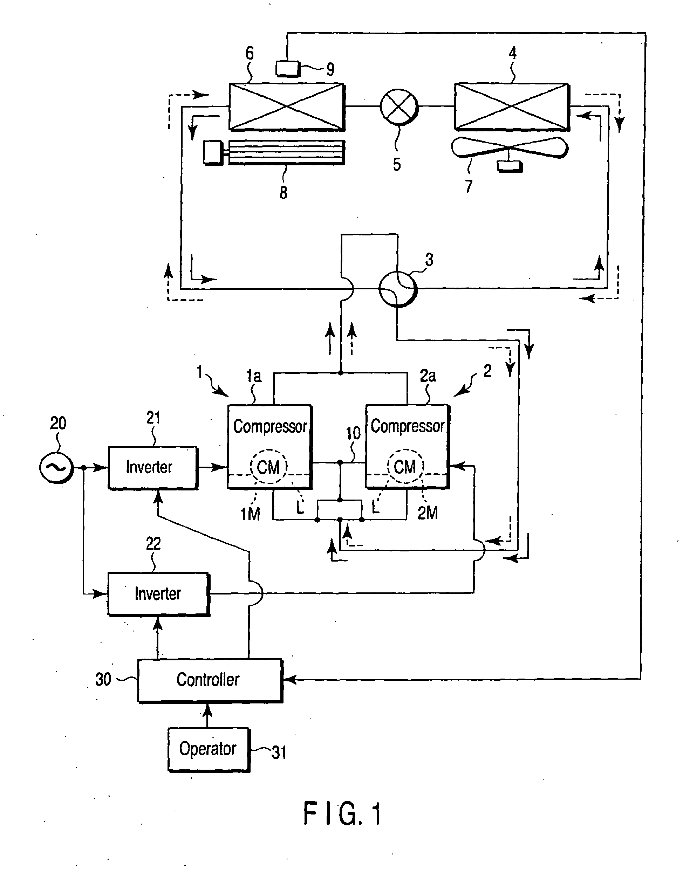

Variable revolution number type (or variable performance type) compressors 1 and 2 are mutually connected parallel by pipes as shown in FIG. 1.

The compressors
1 and 2 are covered with sealed cases 1a and 1b, respectively. The sealed cases 1a and 1b contain drive motors 1M, 2M, compressing units, lubricating oils L and the like. Any one of twin-rotary system, single-rotary system, scroll system and the like is applied to the compressors.

If a high-pressure type compressor in which an inner pressure of the sealed case becomes higher and a low-pressure type compressor in which an inner pressure of the sealed case does not become so high are employed together, a refrigerant and a lubricating oil discharged from the high-pressure type compressor flow into the low-pressure type compressor. For this reason, the compressors need to be either the high-pressure type or the low-pressure type. From the viewpoint of this, for example, high-pressure type twin-rotary system compressors are employed as the compressors 1 and 2.

In a cooling operation, the refrigerants discharged from the compressors 1 and 2 flow to an outdoor heat exchanger 4 through a four-way valve 3 and the refrigerants which have passed through the outdoor heat exchanger 4 flow to an indoor heat exchanger 6 through an electronic expansion valve 5, as represented by arrows of solid lines. The refrigerants which have passed through the indoor heat exchanger 6 are sucked in the compressors 1 and 2 through the four-way valve 3.

In a heating operation, the refrigerants discharged from the compressors 1 and 2 flow to the indoor heat exchanger 6 through the four-way valve 3 and the refrigerants which have passed through the indoor heat exchanger 6 flow to the outdoor heat exchanger 4 through the electronic expansion valve 5 as represented by arrows of broken lines. The refrigerants which have passed through the outdoor heat exchanger 4 are sucked in the compressors 1 and 2 through the four-way valve 3.

In other words, a heat-pump type cooling cycle comprises the compressors 1 and 2, the four-way valve 3, the outdoor heat exchanger 4, the electronic expansion valve 5, and the indoor heat exchanger 6.

An oil pipe 10 is connected between a side portion of the sealed case 1a of the compressor 1 and a side portion of the sealed case 2a of the compressor 2 to adjust an oil level of the lubricating oils L contained in the sealed cases 1a and 1a. An oil return pipe 11 is connected between the oil pipe 10 and inlet ports of the compressors 1 and 2.

If the oil level of the lubricating oil L in the sealed case 1a is elevated as compared with the connection position of the oil pipe 10, the lubricating oil L corresponding to the amount of elevation flows into the oil pipe 10 as a surplus. If the oil level of the lubricating oil L in the sealed case 2a is elevated as compared with the connection position of the oil pipe 10, the lubricating oil L corresponding to the amount of elevation flows into the oil pipe 10 as a surplus. The lubricating oils L flowing into the oil pipe 10 are introduced into the inlet ports of the compressors 1 and 2 by the oil return pipe 11.

An outdoor fan 7 for circulation of outdoor air is arranged for the outdoor heat exchanger 4. An indoor fan 8 for circulation of indoor air is arranged for the indoor heat exchanger 6. A room temperature sensor 9 is arranged in a suction path of indoor air of the indoor fan 8.

Inverters 21 and 22 are connected to a commercial AC power supply 20. The inverters 21 and 22 rectify the voltage of the commercial AC power supply 20, convert the rectified voltage into an AC voltage of a frequency (and level) corresponding to a command from a controller 30, and output the AC voltage. The output of the inverter 21 is supplied to the motor 1M of the compressor 1 as a drive power for the compressor 1.

The output of the inverter 22 is supplied to the motor 2M of the compressor 2 as a drive power for the compressor 2.

The controller 30 controls the four-way valve 3, the outdoor fan 7, the indoor fan 8, and the inverters 21 and 22 in accordance with operations of an operator 31. Particularly, the controller 30 detects a difference between a detected temperature Ta of the room temperature sensor 9 and a set room temperature Ts operated by the operator 31 as the air-conditioning load of a room where the room heat exchanger 6 is installed, and controls both output frequencies F1, F2 of the inverters 21 and 22 (= numbers of revolutions of the compressors 1 and 2) in a common fluctuation pattern in accordance with the detected air-conditioning load.

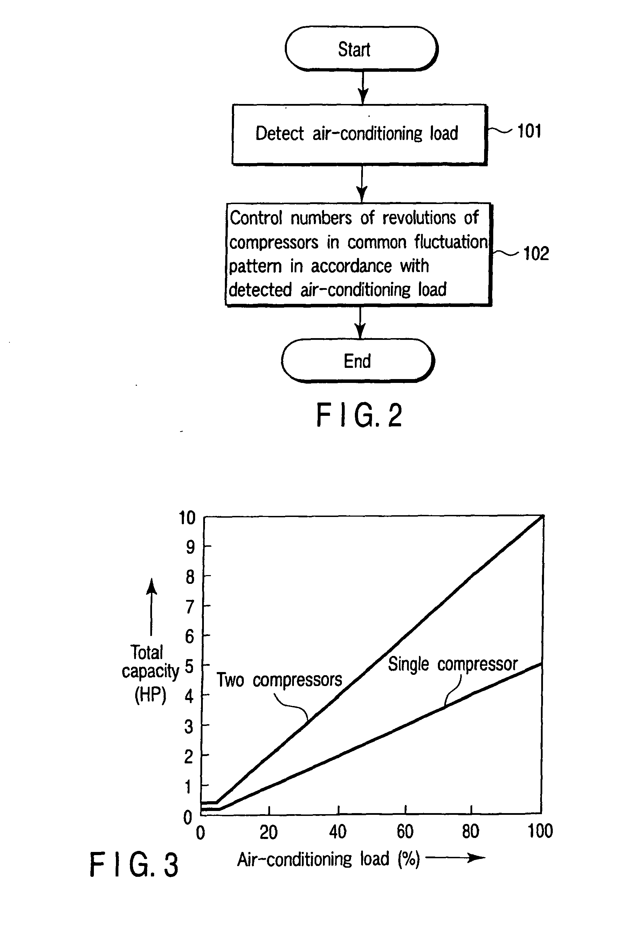

Next, an operation of the above-described structure which is an example useful for understanding the present invention will be explained with reference to a flowchart of FIG. 2.

In the cooling and heating operations, the difference between the detected temperature Ta of the room temperature sensor 9 and the set room temperature Ts is detected as the air-conditioning load (step 101). The numbers of revolutions of the compressors 1 and 2, i.e. the output frequencies F1 and F2 of the inverters 21 and 22, are both controlled in the common fluctuation pattern in accordance with the detected air-conditioning load (step 102).

In other words, if the air-conditioning load is small, both the output frequencies F1 and F2 of the inverters 21 and 22 are set at small values. As the air-conditioning load ΔT is increased, the output frequencies F1 and F2 of the inverters 21 and 22 are both increased in a common increasing pattern. In the event of decrease in the air-conditioning load ΔT, the output frequencies F1 and F2 of the inverters 21 and 22 are both decreased in a common decreasing pattern. The numbers of revolutions (capacities) of the compressors 1 and 2 are varied in accordance with the variation of the output frequencies F1 and F2.

The variation in the total capacities of the compressors 1 and 2 are shown in FIG. 3.

As for actual values of the output frequencies F1 and F2 of the inverters 21 and 22, values mutually different by predetermined frequency are set. A difference of predetermined value "β" (for example, 1.2 rps) between the number of revolutions of the compressor 1 and the number of revolutions of the compressor 2 is thereby kept. For example, if the number of revolutions of the compressor 1 is set at "α", the number of revolutions of the compressor 2 is set at "α + β".

As described above, the operating efficiency of the compressors 1 and 2 becomes better than that in a case of switching operation of one of two compressors and operation of two compressors similarly to the prior art, by controlling the numbers of revolutions of the compressors 1 and 2 both in the common fluctuation pattern. For this reason, the operating efficiency of the whole air conditioner is remarkably improved as shown in FIG. 4. In FIG. 4, a solid line represents the operating efficiency and a broken line represents the operating efficiency of the prior art.

Since the numbers of revolutions of the compressors 1 and 2 are both varied in the common fluctuation pattern, the total capacities of the compressors 1 and 2 are varied not step by step, but smoothly. Comfort can be thereby improved.

Since the numbers of revolutions of the compressors 1 and 2 are both varied in the common fluctuation pattern, repetition of operation and stop In a short time interval as seen in the conventional compressor or what is called a short intermittence operation can be prevented. Since the short intermittence operation can be prevented, the operating efficiency and comfort can be improved and the lifetime of the compressors 1 and 2 can be extended.

Since the short intermittence operation can be prevented, the amounts of lubricating oils L returning to the suction side of the compressors 1 and 2 through the oil pipe 10 and the oil return pipe 11 become mutually equal between the compressors 1 and 2 without especial control. The oil level of the lubricating oils contained In the compressors 1 and 2 can be easily kept.

Since there is a difference of predetermined value "β" between the number of revolutions of the compressor 1 and the number of revolutions of the compressor 2, the resonance point between noise and vibration In the compressor 1 and the resonance point between noise and vibration in the compressors are shifted from each other. The increase in noise and vibration in the compressors 1 and 2 can be thereby prevented.

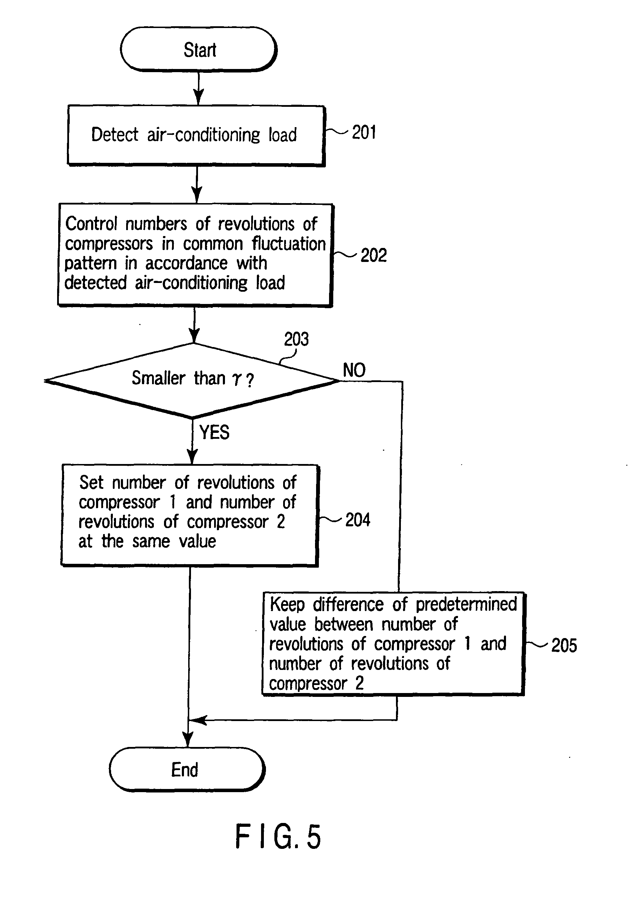

In an embodiment, the air conditioner is configured to perform the operation explained below, with reference to the flow chart of FIG. 5.

As shown in a flowchart of FIG. 5, a difference between the detected temperature Ta of the room temperature sensor 9 and the setting room temperature Ts is detected as the air-conditioning load (step 201). The numbers of revolutions of the compressors 1 and 2 (or output frequencies F1 and F2 of the inverters 21 and 22) are both controlled in a common fluctuation pattern in accordance with the detected air-conditioning load (step 202).

In the controlling operation, the noise and the vibration of the compressor 1 are hardly resonated and, the noise and the vibration of the compressor 1 are also hardly resonated, in the area in which the numbers of revolutions of the compressors 1 and 2 are small. However, the noise and the vibration of the compressor 1 can be easily resonated and, the noise and the vibration of the compressor 1 can also be easily resonated, in the area in which the numbers of revolutions of the compressors 1 and 2 are large. By considering this point, the actual values of the numbers of revolutions of the compressors 1 and 2 are set in the following manner.

For example, the number of revolutions of the compressor 1 and the number of revolutions of the compressor 22 are set at the same value by discriminating that the noise and the vibration of the compressor 1 are hardly resonated and the noise and the vibration of the compressor 1 are also hardly resonated, in the lower revolution control area in which the numbers of revolutions of the compressors 1 and 2 are smaller than γ (for example, 42 rps) (YES of step 203). For example, if the number of revolutions of the compressor 1 is set at "α", the number of revolutions of the compressor 2 is also set at "α" (step 204).

A difference of predetermined value "β (for example, 1.2 rps)" between the number of revolutions of the compressor 1 and the number of revolutions of the compressor 2 is kept by discriminating that the noise and the vibration of the compressor 1 can be easily resonated and, the noise and the vibration of the compressor 1 can also be easily resonated, in the higher revolution control area in which the numbers of revolutions of the compressors 1 and 2 are equal to or larger than γ (NO of step 203). For example, if the number of revolutions of the compressor 1 is set at "α", the number of revolutions of the compressor 2 is also set at "α + β" (step 205).

Since the difference of predetermined value "β" between the number of revolutions of the compressor 1 and the number of revolutions of the compressor 2 is kept, the resonance point between noise and vibration in the compressor 1 and the resonance point between noise and vibration in the compressors are shifted from each other. The increase in noise and vibration in the compressors 1 and 2 can be thereby prevented.

The other structure, operation and advantage are the same as those of the first example.

The present invention is not limited to the embodiments described above and can be modified in various manners without departing from the scope of the invention as claimed.

## Claims

1. An air conditioner comprising:
a refrigerating cycle which has a plurality of compressors (1, 2), an outdoor heat exchanger (4) and an indoor heat exchanger (6), and which is configured to urge a refrigerant discharged from each of the compressors (1, 2) to pass through the outdoor heat exchanger (4) and the indoor heat exchanger (6) and to be sucked in each of the compressors (1, 2); and
a controller (30) configured to control the numbers of revolutions of the compressors (1, 2) in a common fluctuation pattern in accordance with the air-conditioning load of a room in which the indoor heat exchanger (6) is installed;
wherein the controller (30) is configured to set the numbers of revolutions of the compressors (1, 2) at a common value in a lower revolution control area and to keep a difference between the numbers of revolutions of the compressors (1, 2) in a higher revolution control area.

2. The air conditioner according to claim 1, further comprising:
a plurality of inverters (21, 22) configured to output a drive power for each of the compressors (1, 2); wherein
said controller (30) is configured to control the numbers of revolutions of the compressors (1, 2) by controlling the output frequencies of the inverters (21, 22) in a common fluctuation pattern in accordance with the air-conditioning load of a room In which the indoor heat exchanger (6) is installed.

3. The air conditioner according to claim 2, wherein said plurality of compressors (1, 2) are covered with sealed cases and contain lubricating oils in the sealed cases, and further comprising:
oil pipes (10) which are connected to the sealed cases of the compressors (1, 2), respectively, and in which excess of the lubricating oils in the sealed cases flows;
an oil return pipe (11) which is configured to lead the lubricating oils flowing in the oil pipes (10) to inlet ports of the compressors.

## Patentansprüche

1. Klimaanlage, die aufweist:
einen Kühlzyklus, der eine Vielzahl von Kompressoren (1, 2), einen Außanluftwärmetauscher (4) und einen Innenluftwärmetauscher (6) aufweist, und der ausgebildet ist, um ein von jedem der Kompressoren (1, 2) ausgestoßenes Kältemittel dazu zu zwingen, dass es durch den Außentuftwärmetauscher (4) und den Innenluftwärmetauscher (6) gelangt und in einen jeden der Kompressoren (1, 2) gesaugt wird; und
einen Regler (30), der ausgebildet ist, um die Anzahl der Umdrehungen der Kompressoren (1, 2) in einem normalen Schwankungsmuster in Übereinstimmung mit der Klimatisierungsbelastung eines Raumes zu steuern, in dem der Innenluftwärmetauscher (6) installiert ist;
wobei der Regler (30) ausgebildet ist, um die Anzahl der Umdrehungen der Kompressoren (1, 2) auf einen normalen Wert im Steuerbereich der niedrigeren Umdrehungen einzustellen, und um eine Differenz zwischen der Anzahl der Umdrehungen der Kompressoren (1, 2) in einem Steuerbereich der höheren Umdrehungen beizubehalten.

2. Klimaanlage nach Anspruch 1, die außerdem aufweist:
eine Vielzahl von Invertern (21, 22), die ausgebildet sind, um eine Antriebsleistung für einen jeden der Kompressoren (1, 2) abzugeben; wobei
der Regler (30) ausgebildet ist, um die Anzahl der Umdrehungen der Kompressoren (1, 2) zu steuern, indem die Ausgangsfrequenzen der Inverter (21, 22) in einem normalen Schwankungsmuster in Übereinstimmung mit Klimatisierungsbelastung des Raumes gesteuert werden, in dem der Innenluftwärmetauscher (6) installiert ist.

3. Klimaanlage nach Anspruch 2, bei der die Vielzahl der Kompressoren (1, 2) mit abgedichteten Gehäusen bedeckt sind und Schmieröle in den abgedichteten Gehäusen enthalten, und die außerdem aufweist:
Ölrohre (10), die mit den abgedichteten Gehäusen der Kompressoren (1, 2) jeweils verbunden sind, und wobei der Überschuss au Schmierölen in die abgedichteten Gehäuse strömt;
ein Ölrückführrohr (11), das ausgebildet ist, um die Schmieröle, die in den Ölrohren (10) strömen, zu den Eintrittsöffnungen der Kompressoren zu leiten.

## Revendications

1. Climatiseur comprenant:
un cycle de réfrigération comportant une pluralité de compresseurs (1, 2), un échangeur de chaleur extérieur (4) et un échangeur de chaleur intérieur (6), et qui est configuré pour pousser un agent réfrigérant évacué de chacun des compresseurs (1, 2) pour traverser l'échangeur de chaleur extérieur (4) et l'échangeur de chaleur intérieur (6) et pour être aspiré dans chacun des compresseurs (1, 2) ; et
un contrôleur (30) configuré pour commander le nombre de révolutions des compresseurs (1, 2) dans un motif de fluctuation commun conformément à la charge de climatisation d'une pièce dans laquelle est installé l'échangeur de chaleur intérieur (6) ;
dans lequel le contrôleur (30) est configuré pour fixer le nombre de révolutions des compresseurs (1, 2) a une valeur commune dans une zone de commande de révolution basse et pour maintenir la différence entre le nombre de révolutions des compresseurs (1, 2) dans une zone de commande de révolution haute.

2. Climatiseur selon la revendication 1, comprenant en outre
une pluralité d'onduleurs (21, 22) configurés pour fournir l'énergie de commande pour chacun des compresseurs (1, 2) ; dans lequel
ledit contrôleur (30) est configuré pour commander le nombre de révolutions des compresseurs (1, 2) en commandant les fréquences de sortie des onduleurs (21, 22) selon un motif de fluctuation commun conformément à la charge de climatisation d'une pièce dans laquelle est installé l'échangeur de chaleur intérieur (6).

3. Climatiseur selon la revendication 2, dans lequel ladite pluralité de compresseurs (1, 2) sont recouverts de boîtiers étanches et contiennent des huiles de lubrification dans les boîtiers étanches, et comprenant en outre :
des tuyaux d'huile (10) qui sont respectivement reliés aux boîtiers étanches des compresseurs (1, 2) et dans lesquels s'écoule l'huile de lubrification en excès dans les boîtiers étanches ;
un tuyau de retour d'huile (11) configuré pour conduire les huiles de lubrification s'écoulant dans les tuyaux d'huile (10) vers les orifices d'entrée des compresseurs.
